# EUROPÄISCHE PATENTANMELDUNG

(11) **EP 0 824 059 A1**
(43) Veröffentlichungstag der Anmeldung: **18.02.1998**
(21) Anmeldenummer: 97113239.4
(22) Anmeldetag: 31.07.1997
(51) Int. Cl.: B29C 47/02, F16L 11/08

(54) **Verfahren zum Herstellen eines mehrschichtigen Schlauches**

(30) Priorität: 12.08.1996 DE 19632491
(71) Anmelder: VERITAS GUMMIWERKE AG, 63571 Gelnhausen (DE)
(72) Erfinder: Ludwig, Hans-Josef, Dipl.-Ing., 63571 Gelnhausen (DE); Ludwig, Ligia, Dipl.-Ing., 68623 Lampertheim (DE); Severengiz, Tevfik, Dr., 63571 Gelnhausen (DE)
(74) Vertreter: Grünecker, Kinkeldey, Stockmair & Schwanhäusser Anwaltssozietät

(57) **Zusammenfassung**

Die vorliegende Erfindung betrifft ein Verfahren zum Herstellen eines mehrschichtigen Schlauches (1), insbesondere Kraftstoffschlauches, mit einem im wesentlichen permeationsarmen Inliner (2), bei dem zunächst der Inliner (2) auf einem Dorn (6) aufextrudiert wird, wonach mindestens eine Verstärkungsschicht (3) auf den durch den Dorn (6) gestützten Inliner (2) aufextrudiert wird, wobei der Dorn (6) gleichzeitig mit dem Inliner (2) koextrudiert wird, und der Inliner (2) und/oder der Dorn (6) aus einem Adhäsion zwischen Dorn (6) und Inliner (2) verhindernden Material besteht.

## Beschreibung

Die vorliegende Erfindung betrifft ein Verfahren zum Herstellen eines mehrschichtigen Schlauches, insbesondere Kraftstoffschlauches, mit einem im wesentlichen permeationsarmen Inliner, bei dem zunächst der Inliner auf einen Dorn aufextrudiert wird, wonach mindestens eine Verstärkungsschicht auf den durch den Dorn gestützten Inliner aufextrudiert wird.

Die bekannten Kraftstoffschläuche umfassen einen gasundurchlässigen Inliner, eine auf diesen angeordnete Gummischicht, eine Verstärkungsschicht aus Gewebe, sowie eine an der Aussenseite aufgebrachte Gummischicht.

Ein Verfahren zur Herstellung eines Schlauches der obengenannten Gattung ist bereits aus der DE-OS 39 14 011 bekannt. Bei dem bekannten Verfahren läuft zunächst ein vorgefertigter Kern, hergestellt aus einem plastifizierten oder nicht-plastifizierten Polymer oder Elastomer, durch einen Extruder, wobei während diesen Vorganges um den Kern herum ein Harz derart extrudiert wird, daß eine innere Schicht des Schlauches entsteht. Anschließend wird der mit einer inneren Harzschicht versehene Kern durch einen Gummiextruder geführt, wobei eine äußere Schicht auf die innere Schicht auflaminiert wird. Anschließend wird eine Verstärkungsschicht auf die äußere Schicht aufgetragen, worauf eine Gummideckschicht durch Extrusion auf die Verstärkungsschicht aufgetragen wird. Nach Fertigstellung des Schlauches, wird der Kern aus dem Schlauch herausgezogen.

Ferner ist beschrieben, daß gegebenenfalls auf bzw. zwischen die innere, d.h. die Harzschicht, und die äußere Gummischicht Adhesive gegeben werden können, so daß die Schichten gut miteinander verbunden werden. Kein Hinweis findet sich jedoch im Hinblick auf die Zusammensetzung oder Art der Adhesive, noch hinsichtlich eines geeigneten Auftragungsverfahrens.

Aus der obigen kurzen Zusammenfassung des Standes der Technik wird deutlich, daß das bekannte Verfahren eine Vielzahl von einzelnen Fertigungsschritten umfaßt, welche jeweils für sich genommen zeitaufwendig sind, wodurch die Herstellung des Gummischlauches einerseits sehr langwierig ist, andererseits die Produktionskosten steigen.

Demzufolge liegt der vorliegenden Erfindung die Aufgabe zugrunde, ein Verfahren zum Herstellen eines mehrschichtigen Schlauches, insbesondere Kraftstoffschlauches, zur Verfügung zu stellen, welches gegenüber dem bekannten Verfahren deutlich vereinfacht ist.

Diese Aufgabe wird für ein Verfahren zum Herstellen eines mehrschichtigen Schlauches, insbesondere Kraftstoffschlauches, mit einem im wesentlichen gasundurchlässigen Inliner, bei dem zunächst der Inliner auf einen Dorn aufextrudiert wird, wonach mindestens eine Verstärkungsschicht auf den durch den Dorn gestützten Inliner aufextrudiert wird, dadurch gelöst, daß der Dorn gleichzeitig mit dem Inliner coextrudiert wird, wobei der Inliner und/oder der Dorn aus einem Adhäsion zwischen Dorn und Inliner verhindernden Material besteht.

Mit dem erfindungsgemäßen Verfahren ist es möglich die Verfahrensschritte erheblich zu verkürzen, da nunmehr der Dorn und der Inliner in einem einzigen Verfahrensschritt hergestellt werden. Da der Dorn nicht mehr vorab gefertigt wird, entfallen nicht nur die bei dem bekannten Verfahren vorab notwendigen Herstellungsschritte des Dornes, sondern gleichzeitig auch die mit der Lagerung des fertiggestellten Dornes verbundenen Aufwendungen.

Die gleichzeitige Coextrusion zweier Kunststoffe ist aus dem Stand der Technik bereits bekannt. Im vorliegenden Fall stellte sich jedoch das Problem, daß der mit dem Inliner coextrudierte Dorn nach Fertigstellung des Schlauches aus dem Schlauch herausgezogen werden muß. Die Coextrusion zweier Kunststoffe ist jedoch in solchen Fällen bevorzugt, bei welchen eine möglichst gute Verbindung zwischen den gleichzeitig extrudierten Kunststoffen erzielt werden sollte, da coextrudierte Kunststoffe eine bessere Verbindung zwischen den Kunststoffen ausbilden, als zwei aufeinanderfolgend extrudierte Kunststoffe.

Um die Aufgabe der vorliegenden Erfindung zu lösen, mußten daher die herrschenden Vorbehalte überwunden werden, die darin bestehen, daß es unmöglich ist, einen Inliner mit einer Seite mit einer guten Verbindbarkeit mit weiteren Schichten zu erzeugen während die andere Seite einer schlechten Verbindung mit dem Dorn aufweist.

Als besonders bevorzugt hat es sich hierbei erwiesen, wenn der Inliner aus Tetrafluorethylen-Hexafluorpropylen-Vinylidenfluorid (THV) gebildet wird.

In der Praxis hat es sich gezeigt, daß dieses Material die Anforderungen erfüllt, die an den Inliner gestellt werden, d.h. das Material stellt unter anderem die notwendige Sperrwirkung gegen Medien, z.B. Kraftstoffe, bereit.

Ferner hat es sich als bevorzugt erwiesen, wenn der Dorn aus einem festigkeitsbeständigen und flexiblen Kunststoff hergestellt wird.

Gemäß einer weiteren bevorzugten Ausführungsform der vorliegenden Erfindung ist vorgesehen, daß auf den Inliner vor dem Aufbringen der Verstärkungsschichten ein Haftvermittler aufgebracht wird. Hierbei stellt die Haftvermittlerschicht gleichzeitig eine Gummischicht bereit und übt daher sowohl die Funktion eines Haftvermittlers als auch einer Verstärkungsschicht aus. Durch den Einsatz dieser Mehrfunktionsschicht kann das Herstellungsverfahren deutlich verkürzt werden.

Durch den zusätzlichen Einsatz eines Haftvermittlers kann ferner die Verbindung zwischen dem Inliner und den nachfolgend aufgebrachten Schichten deutlich verbessert werden.

Vorzugsweise wird die Haftvermittlerschicht durch Extrusion aufgebracht.

Dieses Verfahren ermöglicht den Schritt des Aufbringes des Haftvermittlers ohne Probleme in den Herstellungsablauf einzugliedern, so daß keine zusätzlichen aufwendigen Vorrichtungen bereitgestellt oder weitere Schritte zwischengeschaltet werden müssen.

Als besonders bevorzugt hat sich hierbei ein Haftvermittler mit folgender Zusammensetzung erwiesen:

| | |
|---|---|
| Epichlorhydrin / Ethylenoxid-Copolymer | 100,00 |
| Ruß FEF | 35,00 |
| Ruß MT | 20,00 |
| Poly (1,3-butylenglycoladipat) | 5,00 |
| Nickel-diorganyldithiocarbamate | 3,00 |
| Sorbit-monostearat | 1,50 |
| Kalziumhydroxid | 6,00 |
| Blei- (II, IV) -oxid, 80 %ig | 5,00 |
| 2-Mercaptomidazolin, 80 %ig | 1,20 |
| Gemisch aus 70% Phenol-Formaldehyd-Harz und 30% 1.8 Diazabicyclo -(5.4.0) undec-7-en | 0,50 |

Weitere bevorzugte Haftvermittler werden auf der Basis von Nitrilkautschuk (NBR), Acrylatkautschuk (ACM), Ethylenvinylactetat-Copolymer (EAM) und weiteren medienverträglichen Kautschuktypen oder Kunststoffen hergestellt, wobei die genannten Materialien lediglich eine bevorzugte Auswahl darstellen.

Im folgenden wird ein bevorzugtes Ausführungsbeispiel der Erfindung unter Bezugnahme auf die Bezeichnung beschrieben. Es zeigt:

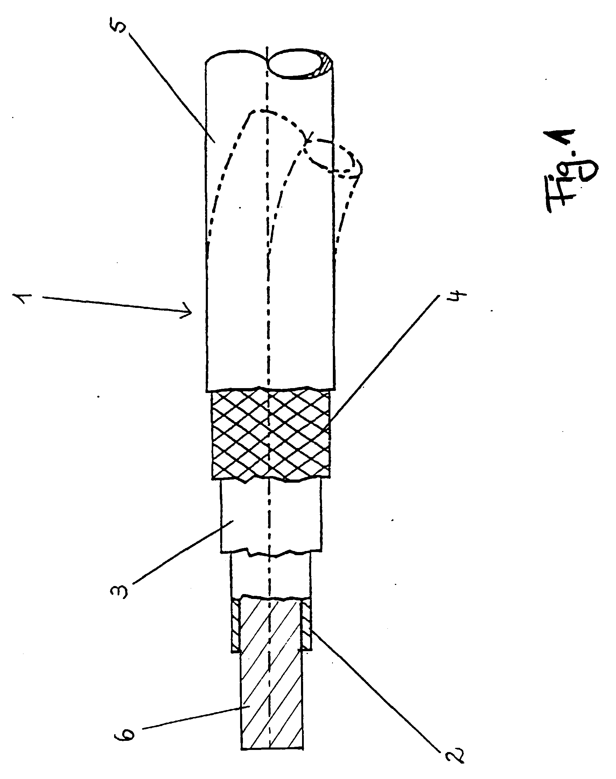

### Figur 1: einen erfindungsgemäß hergestellten Schlauch

Der in Figur 1 dargestellte erfindungsgemäße hergestellte Schlauch 1 besteht aus einem Inliner 2, einer auf dem Inliner herum aufgebrachten Gummischicht 3, auf welcher wiederum eine Gewebeschicht 4 aufgebracht ist. Die Außenschicht 5 bildet wiederum eine Abschlußschicht aus Gummi.

Eine bevorzugte Ausführungsform des erfindungsgemäßen Herstellungsverfahrens ist in dem Blockdiagramm gemäß Figur 2 dargestellt. Hierbei wird zunächst eine zur Coextrusion geeignete Extruderanlage mit den gewünschten Mischungen für den Dorn 6 und für den Inliner 2 beschickt. Die beiden Mischungen werden solchermaßen coextrudiert, daß ein Dorn 6 aus Vollmaterial extrudiert wird und um diesen herum gleichzeitig ein Inliner 2 extrudiert wird. Dieser Inliner bildet die innere Schicht des herzustellenden Schlauches. Die Materialien des Dorns 6 und des Inliners sind hierbei so gewählt, daß der Dorn 6 den gleichzeitig extrudierten Inliner 2 abstützt, sich jedoch keine Verbindung zwischen den Inliner 2 und dem Dorn 6 bildet, so daß der Dorn 6 zu einem späteren Zeitpunkt problemlos aus dem Inliner 2 herausgezogen werden kann.

In einem nachfolgenden Verfahrensschritt wird auf den Inliner 2 ein Haftvermittler 3 aufextrudiert. Durch diesen Haftvermittler ist es möglich, eine besonders gute Verbindung mit den nachfolgenden Verstärkungsschichten des Schlauches zu erzielen. Gleichzeitig stellt die Haftvermittlerschicht 3 bereits die unmittelbar auf dem Inliner 2 angeordnete Verstärkungsschicht aus Gummi bereit. Die Haftvermittlerschicht dient folglich sowohl als Haftvermittler als auch als Verstärkungsschicht.

Der mit Haftvermittlerschicht 3 versehene und auf dem Dorn 6 abgestützte Inliner 2 wird anschließend mit einer weiteren Verstärkungsschicht versehen, welche z.B. aus einem verflochtenen Textilgarn bestehen kann.

Abschließend wird eine Außenschicht aus Gummi auf dem zuvor hergestellten mehrschichtigen Schlauchverbund extrudiert.

Nachdem der Schlauch solchermaßen fertiggestellt und vulkanisiert wurde, wird der Dorn herausgezogen, so daß der Schlauch nunmehr einsatzbereit ist.

## Patentansprüche

1. Verfahren zum Herstellen eines mehrschichtigen Schlauches (1), insbesondere Kraftstoffschlauches, mit einem im wesentlichen permeationsarmen Inliner (2), bei dem zunächst der Inliner (2) auf einen Dorn (6) aufextrudiert wird, wonach mindestens eine Verstärkungsschicht (3, 4, 5), auf den durch den Dorn (6) gestützten Inliner (2) aufextrudiert wird,
**dadurch gekennzeichnet, daß**
der Dorn (6) gleichzeitig mit dem Inliner (2) coextrudiert wird, wobei der Inliner (2) und/oder der Dorn (6) aus einem Adhäsion zwischen Dorn (6) und Inliner (2) verhindernden Material besteht.

2. Verfahren nach Anspruch 1,
**dadurch gekennzeichnet, daß**
der Inliner (2) aus Tetrafluor-Ethylen-Hexafluorpropylen-Vinylidenfluorid gebildet wird.

3. Verfahren nach Anspruch 1 oder 2,
**dadurch gekennzeichnet, daß**
der Dorn aus einem festigkeitsbeständigen und flexiblen Kunststoff gebildet wird.

4. Verfahren nach wenigstens einen der Ansprüche 1 bis 3,
**dadurch gekennzeichnet, daß**
aus dem Inliner (2) vor den Aufbringen der Verstärkungsschichten ein Haftvermittler(3) aufgebracht wird.

5. Verfahren nach wenigstens einen der Ansprüche 1 bis 4,
**dadurch gekennzeichnet, daß**
der Haftvermittler (3) durch Extrusion aufgebracht wird.

6. Verfahren nach wenigstens einem der Ansprüche 1 bis 5,
**dadurch gekennzeichnet, daß**
ein Haftvermittler (3) mit folgender Zusammensetzung verwendet wird:
| | |
|---|---|
| Epichlorhydrin / Ethylenoxid-Copolymer | 100,00 |
| Ruß FEF | 35,00 |
| Ruß MT | 20,00 |
| Poly (1,3-butylenglycoladipat) | 5,00 |
| Nickel-diorganyldithiocarbamate | 3,00 |
| Sorbit-monostearat | 1,50 |
| Kalziumhydroxid | 6,00 |
| Blei- (II, IV) -oxid, 80 %ig | 5,00 |
| 2-Mercaptomidazolin, 80 %ig | 1,20 |
| Gemisch aus 70% Phenol-Formaldehyd-Harz und 30% 1.8 Diazabicyclo -(5.4.0) undec-7-en | 0,50 |

7. Verfahren nach wenigstens einem der Ansprüche 1 bis 5,
**dadurch gekennzeichnet, daß**
eine Haftvermittlerschicht (3) verwendet wird, hergestellt auf Basis einer der folgenden Materialien Nitrilkautschuk (NBR), Acrylatkautschuk (ACM) und Ethylenvinylacetat-Copolmyer (EAMT) und weiteren medienverträglichen Kautschuktypen oder Kunststoffen.

8. Verfahren nach wenigstens einem der Ansprüche 4-7,
**dadurch gekennzeichnet, daß**
der Haftvermittler die unmittelbar auf dem Inliner (2) angeordnete Verstärkungsschicht bereitstellt.

9. Mehrschichtiger Schlauch (1), insbesondere Kraftstoffschlauch, mit einen im wesentlichen permeationsarmen Inliner (2) und mindestens einer Verstärkungsschicht (3, 4, 5)
**dadurch gekennzeichnet, daß**
die auf dem Inliner angeordnete Verstärkungsschicht haftvermittelnde Eigenschaften aufweist.

10. Mehrschichtiger Schlauch (1), nach Anspruch 8, hergestellt nach einem der Verfahren gemäß Anspruch 1 bis 7.
